# EUROPEAN PATENT APPLICATION

(11) **EP 4 844 374 A1**
(43) Date of publication of application: **25.11.2026**
(21) Application number: 24918640.4
(22) Date of filing: 28.10.2024
(51) Int. Cl.: G01N 21/17

(54) **OPTICAL INTERFERENCE MEASUREMENT DEVICE**

(30) Priority: 16.01.2024 JP 2024004715
(71) Applicant: Panasonic Intellectual Property Management Co., Ltd., Kadoma-shi, Osaka 571-0057 (JP)
(72) Inventor: OYAMA, Taisei, Kadoma-shi, Osaka 571-0057 (JP); KABETANI, Yasuhiro, Kadoma-shi, Osaka 571-0057 (JP); OTA, Sadafumi, Kadoma-shi, Osaka 571-0057 (JP)
(74) Representative: Grünecker Patent- und Rechtsanwälte PartG mbB
(86) International application number: PCT/JP2024/038365
(87) International publication number: WO 2025/154353

(57) **Abstract**

An optical interference measurement device measures an object by using interference light between reference light and measurement light emitted from a wavelength scanning light source (202) to continuously irradiate object W using arc scanning, and reflected from the object. The optical interference measurement device includes: optical interference measurement unit (201) including interference light detection portion (204) for receiving the interference light and generating an interference light signal indicating an intensity of the interference light; and signal processing unit (216) that samples the interference light signal to generate a plurality of signals including a signal within Nyquist frequency and an alias, restores the alias to a frequency domain of an actual measurement value, and acquires a surface shape profile of the object based on the signal within the Nyquist frequency and the signal restored from the alias.

## Description

### TECHNICAL FIELD

The present disclosure relates to an optical interference measurement device that measures an object to be measured using interference light between measurement light and reference light.

### BACKGROUND ART

Optical coherence tomography (OCT) is a tomographic imaging method for a structure such as a coating film or a living body using a light interference phenomenon. The OCT has already been put to practical use in the field of ophthalmology, and has been used for tomographic imaging of a fine domain such as a retina in an eyeball as a tomographic measurement method having a high resolution of a dozen micrometers.

The OCT includes two types of time domain OCT that requires scanning of a reference plane (TD-OCT) and frequency domain OCT that does not require scanning of a reference plane (FD-OCT). Although the FD-OCT also includes two types of a spectrometer type (SD-OCT) and a wavelength scanning light source type (SS-OCT), each of the types divides light emitted from a light source into measurement light and reference light, then multiplexes the measurement light and the reference light reflected from a measurement object, thereby acquiring an optical tomographic image based on a beat frequency of interference light between the measurement light and the reference light.

Fig. 8 is a diagram illustrating a conventional SS-OCT device described in PTL 1. The device illustrated in Fig. 8 includes a low coherence interferometer in which light emitted from wavelength scanning light source 10 is divided into reference light and measurement light by beam splitter 13. Then, the reference light enters photodetector 17 through lens 11 and mirror 12, and the measurement light similarly enters photodetector 17 after being reflected from measurement object 16 through lens 14 and galvanometer mirror 15.

Photodetector 17 receives a signal, and amplifier 18 amplifies the signal in which a high frequency component is cut through low-pass filter (LPF) 21. Additionally, scan trigger generator 19 is provided to generate a trigger signal for each wavelength scanning of wavelength scanning light source 10, and k-trigger generator 20 generates a k-trigger signal, k-trigger generator 20 being provided to generate k-trigger signals at equal frequency intervals of light of wavelength scanning light source 10 within one scanning period using the trigger signal as a trigger. Based on the k-trigger signal, Fourier transform circuit 22 performs Fourier transformation on an optical beat signal of interference light, and then an optical tomographic image can be obtained.

### Citation List

### Patent Literature

PTL 1: Unexamined Japanese Patent Publication No. 2007-24677

### SUMMARY OF THE INVENTION

The SS-OCT device includes the lens provided behind the galvanometer mirror as a scanning mechanism, thus limiting a width in a scanning direction. Then, a measurable range in a depth direction, that is, half of a maximum value of an optical path length difference between reference light and measurement light is limited by frequency band design of the LPF and the photodetector, the optical path length difference enabling spectral interference fringes to be correctly obtained.

Thus, even when the width in the scanning direction of the galvanometer mirror is not limited by eliminating the lens in the conventional configuration, change in distance to a measurement object during scanning cannot be increased to more than the measurable range in the depth direction, thus causing a problem that a measurable measurement object is limited in size in the scanning direction.

It is an object of the present disclosure to provide an optical interference measurement device capable of performing measurement even when a change in distance to a measurement object range during scanning is larger than a measurement range in a depth direction, that is, capable of expanding the measurement range.

An optical interference measurement device according to an aspect of the present disclosure measures an object by using interference light between reference light and measurement light emitted from a wavelength scanning light source to continuously irradiate the object using arc scanning, and reflected from the object. The optical interference measurement device includes: an optical interference measurement unit including interference light detection portion for receiving the interference light and generating an interference light signal indicating an intensity of the interference light; and a signal processing unit that samples the interference light signal to generate a plurality of signals including a signal within Nyquist frequency and an alias, restores the alias to a frequency domain of an actual measurement value, and acquires a surface shape profile of the object based on the signal within the Nyquist frequency and the signal restored from the alias.

As described above, the optical interference measurement device according to the aspect of the present disclosure is configured to take in a plurality of signals including a signal within Nyquist frequency (that is, less than the Nyquist frequency) and an alias from an object, and restore the alias to a frequency domain of an actual measured value, while preventing a signal having the Nyquist frequency or more from being attenuated, the signal being attenuated by the LPF in the conventional SS-OCT device. As a result, measurement can be performed even when a change in distance to a measurement object range during scanning is larger than a measurement range in a depth direction, that is, the measurement range can be expanded. Thus, even when a distance to an object is larger than a measurable range, a surface shape of the object can be measured. Here, a plurality of signals from the object is divided into signals within the Nyquist frequency and aliases by arc scanning. The aliases mean signals that are folded back centered on the Nyquist frequency into the measurable range from the zero point because signals having the Nyquist frequency or more are outside a maximum measurable range. Additionally, positive and negative frequencies cannot be discriminated in principle, so that a signal of the negative frequency is folded back to a signal of the positive frequency centered on the zero point.

### BRIEF DESCRIPTION OF THE DRAWINGS

Fig. 1 is a diagram illustrating a general configuration diagram of an SS-OCT according to an exemplary embodiment.
Fig. 2A is a diagram of an alias according to the exemplary embodiment.
Fig. 2B is a diagram of an excessive interference domain of the SS-OCT according to the exemplary embodiment.
Fig. 2C is a diagram of a folded waveform according to the exemplary embodiment.
Fig. 3 is a flowchart of signal processing according to the exemplary embodiment.
Fig. 4 is a diagram of restoration processing of a folded waveform convex downward according to the exemplary embodiment.
Fig. 5 is a diagram of restoration processing of a folded waveform convex upward according to the exemplary embodiment.
Fig. 6 is a diagram of design of a zero point position according to the exemplary embodiment.
Fig. 7 is a diagram illustrating control of a dead zone position according to the exemplary embodiment.
Fig. 8 is a diagram illustrating a conventional SS-OCT device described in PTL 1.

### DESCRIPTION OF EMBODIMENT

Hereinafter, an exemplary embodiment of the present disclosure will be described with reference to the drawings.

### <Exemplary embodiment>

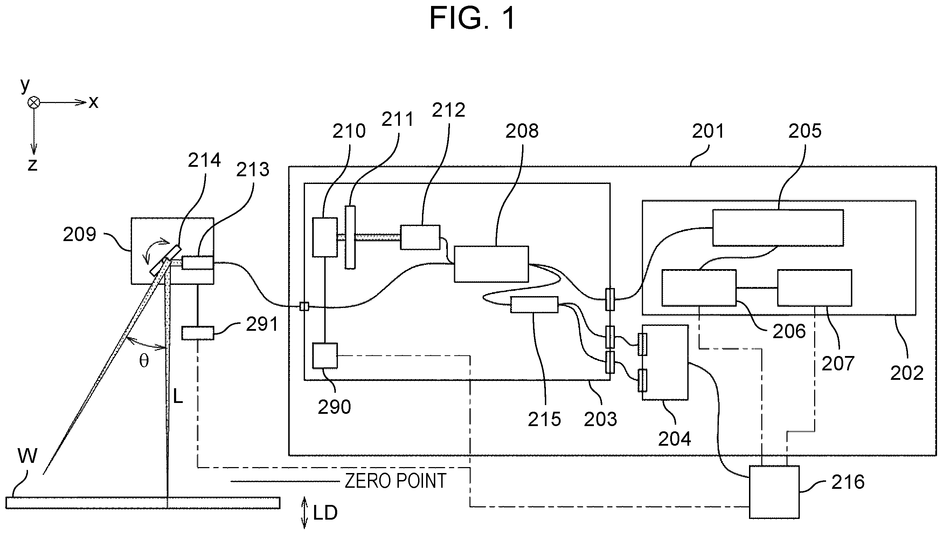

Fig. 1 is a diagram illustrating a general configuration of an optical interference measurement device according to the exemplary embodiment. The optical interference measurement device includes SS-OCT device 201 as an example of an optical interference measurement unit, measurement head 209, and signal processing unit 216.

SS-OCT device 201 includes wavelength scanning light source 202, optical fiber interferometer 203, and photodetector 204 as an example of interference light detection portion.

Wavelength scanning light source 202 includes wavelength scanning light generator 205 having a long coherence length and good reproducibility, trigger generator 206 that outputs a trigger signal for each wavelength scanning, and k-clock generator 207 that generates a k-clock signal for sampling optical frequencies of wavelength scanning light at equal intervals based on the trigger signal. Trigger generator 206 for the trigger signal and k-clock generator 207 for the k-clock signal are connected to signal processing unit 216, and are used when Fourier transform is performed at timing of data acquisition. Signal processing unit 216 can obtain an optical tomographic image by performing the Fourier transform on interference light based on the k-clock signal.

Wavelength scanning light source 202 generates light that enters optical fiber interferometer 203.

Optical fiber interferometer 203 includes coupler 208 with two light receiving ports including a first light receiving port that is connected to a light emission port of wavelength scanning light source 202. Coupler 208 includes light transmission ports including one port connected to measurement head 209 outside the optical fiber interferometer, and the other port connected to collimator lens 212 through which reference light is incident on reference surface 211. Coupler 208 is an example of light splitting portion, and splits light output from wavelength scanning light source 202 into measurement light and the reference light.

The measurement light is irradiated to measurement object W through varifocal collimator 213 and scanning mechanism 214 in measurement head 209, and is reflected or scattered on measurement object W. Reflected or scattered light of measurement light enters coupler 208 from the measurement head 209, is split into two by "50:50" coupler 215, and then the two each enter photodetector 204. Photodetector 204 detects interference light obtained by multiplexing the measurement light from measurement object W and the reference light.

The reference light is reflected by reference surface 211 that can be driven forward and backward by stepping motor 210 under control of controller 290 as an example of a reference surface movement device. Reflected light of the reference light enters coupler 208 through collimator lens 212 as with the measurement light, is split into two by "50:50" coupler 215, and then the two each enters photodetector 204. Reference surface movement device drives the reference surface 211 engaged with a screw shaft forward and backward by rotating the screw shaft forward and backward using stepping motor 210 under control of controller 290 connected to signal processing unit 216, for example. When a position of reference surface 211 is moved, reference optical path length is changed to cancel a change in difference of optical path length from signal optical path length, and thus a position of a zero point to be described later can be always kept constant.

Optical fiber interferometer 203 has a point at which the signal optical path length of the measurement light coincides with the reference optical path length of the reference light, the point being defined as the zero point, and Fig. 1 indicates a position of the zero point. The position of the zero point in the exemplary embodiment can be freely changed by changing a distance from collimator lens 212 to reference surface 211 or a distance from coupler 208 to collimator lens 212, for example.

The interference light of the measurement light and the reference light is divided into two by "50:50" coupler 215 in photodetector 204, and then the two types of interference light are input to two respective input units. Photodetector 204 extracts and amplifies differential signals of interference signals of the two types of interference light, and then inputs the differential signals to signal processing unit 216.

Signal processing unit 216 detects the interference signals at different optical frequency sampling intervals corresponding to sweep speed of wavelength scanning light source 202, and performs the Fourier transform on the interference signals with reference to the k-clock signal for sampling optical frequencies of wavelength scanning light source 202 at equal intervals.

When signal processing unit 216 performs appropriate signal processing including the Fourier transform on these interference signals as described above, differentiation of a one-dimensional refractive index distribution in the signal optical path of the measurement light of measurement object W, that is, a reflectance distribution can be obtained. Here, positive and negative signs of an optical path length difference are defined to be determined by a positive and a negative of a calculation result obtained by subtracting the reference optical path length from the signal optical path length.

At this time, when a finite measurable range in a depth direction that can be measured by SS-OCT device 201 is defined as LD as described above, a measurable maximum range is a range of ±LD centered on the zero point.

Scanning mechanism 214 is an element capable of changing the reflection direction of the measurement light, such as a galvanometer scanner, a polygon scanner, or a resonance scanner, and can perform scanning with the measurement light in a θ direction. When measurement object W is continuously scanned with the measurement light in the θ direction using scanning mechanism 214 driven under control of scanning controller 291 connected to signal processing unit 216, a surface shape of measurement object W in an X direction can be measured.

### <Band design>

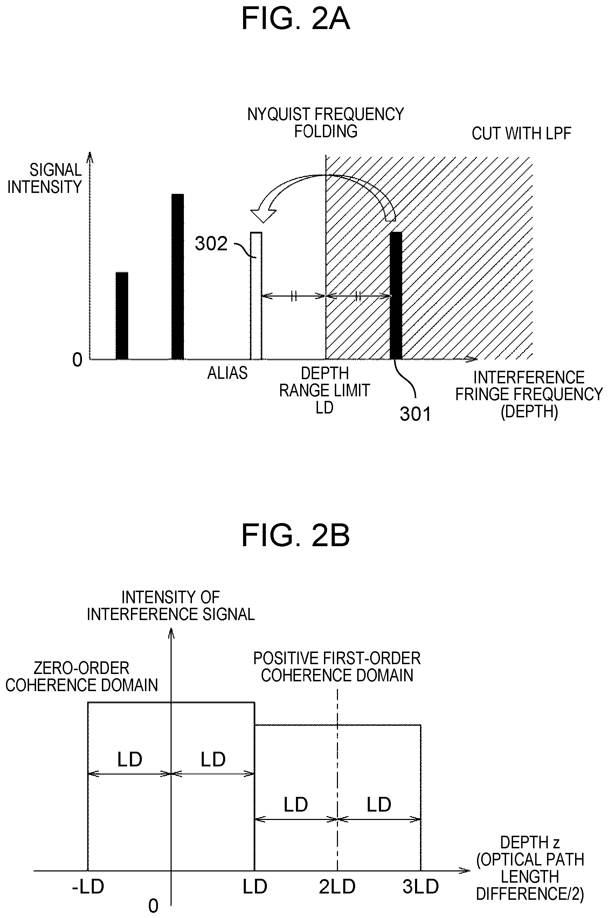

With reference to Figs. 2A to 2C, a method for detecting an interference signal outside the range of ±LD centered on the zero point, which is a maximum measurable range in SS-OCT device 201, will be described.

Fig. 2B illustrates a coherent domain of SS-OCT device 201 according to the exemplary embodiment. Here, a range of the optical path length difference in which the interference signal can be obtained is referred to as the coherent domain. Although the coherent domain is drawn by a Lorentz function centered on the zero point when a vertical axis represents intensity of an interference signal and a horizontal axis represents depth z (= optical path length difference/2) in an optical axis direction, a rectangle is here drawn for simplicity, in which intensity of the interference signal is constant and a width is ±LD. Near the zero point where the optical path length difference between the signal optical path and the reference optical path is zero, the interference signal is detected in a range of the optical path length difference "0 ± LD". Near the zero point is defined as a zero-order coherent domain.

Then, when the optical path length difference between the signal optical path and the reference optical path is further separated by +4LD, that is, when depth z is separated from the zero point by +2LD, the interference signal can be obtained even in a domain from the depth LD to the 3LD. This domain is defined as a positive first-order coherent domain.

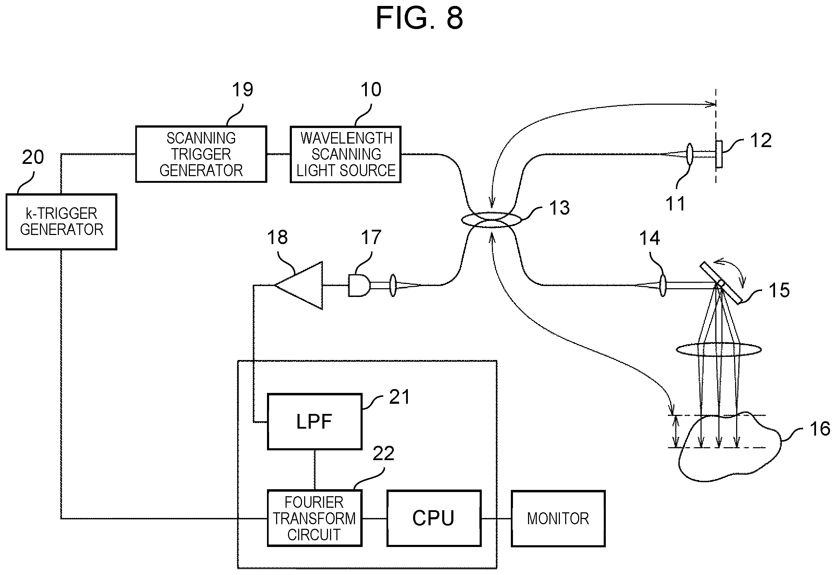

Here, +LD coincides with Nyquist frequency that is half a sampling frequency when a signal is sampled for sampling as illustrated in Fig. 2A. A signal of an interference fringe at a frequency deeper than this Nyquist frequency is attenuated by the LPF in the conventional SS-OCT device illustrated in Fig. 8.

SS-OCT device 201 of the present exemplary embodiment is formed with band design in which signal 301 having the Nyquist frequency or higher is not attenuated. However, signal 301 at or above the Nyquist frequency is outside the +LD of the maximum measurable range, and thus is folded back within a range of +LD from the zero point, that is, the measurable range, centered on the Nyquist frequency. This folded signal is referred to as alias 302. Additionally, SS-OCT device 201 cannot discriminate positive and negative frequencies in principle, so that a negative frequency signal is folded back to a positive frequency signal centered on the zero point.

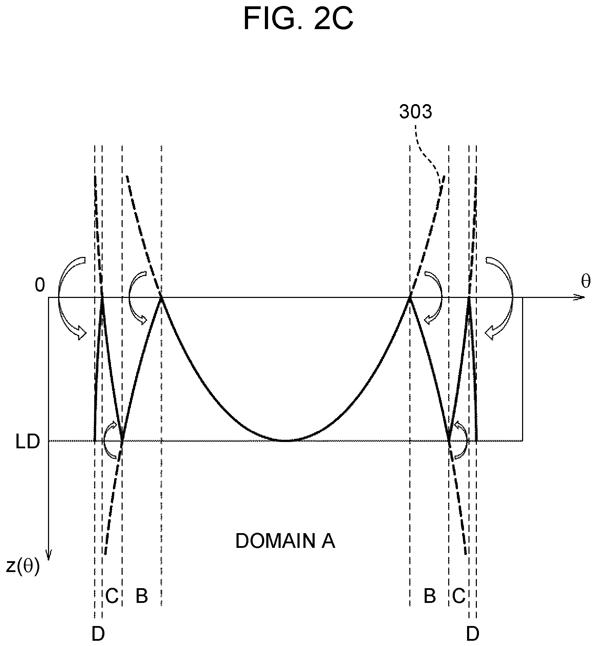

Fig. 2C illustrates a signal that can be actually acquired for arc scanning using folding of these two patterns. The arc scanning has an original signal, that is, signal 303 with an actual measurement value falls within the range of +LD within the measurable range by repeating folding of the two patterns multiple times. Assuming that domain A is a negative side of a zero-order coherence length, domain B is a positive side of a zero-order coherence length, domain C is a negative side of a positive first-order coherence length, and domain D is a positive side of the positive first-order coherence length. As in the conventional SS-OCT device illustrated in Fig. 8, the positive side of the zero-order coherence length is usually referred to as within a measurement range. This setting of the order of the coherence length is one example, and domain A may be set to the negative side of the positive first-order coherence length or a negative side of a negative first-order coherence length, for example.

Signal processing unit 216 processes the signal folded back within the measurement range and returns the signal to original signal 303 in the arc scanning, thereby trying to expand the measurable range. Fig. 2C is an example of the signal, and the signal may be an arc convex upward, an arc with no fold, or an arc with multiple folds, for example.

In other words, the measurement light from wavelength scanning light source 202 is used for continuously scanning object W by the arc scanning in signal acquisition. Photodetector 204 receives the interference light and generates an interference light signal indicating an intensity of the interference light. Photodetector 204 transmits the interference light signal to signal processing unit 216.

Signal processing unit 216 samples interference light signals to generate a plurality of signals including a signal within the Nyquist frequency and an alias. Signal processing unit 216 restores alias 302 to a frequency domain of an actual measured value. Signal processing unit 216 further acquires a surface shape profile of object W based on signals within the Nyquist frequency and the signal restored from the alias.

### <Signal processing>

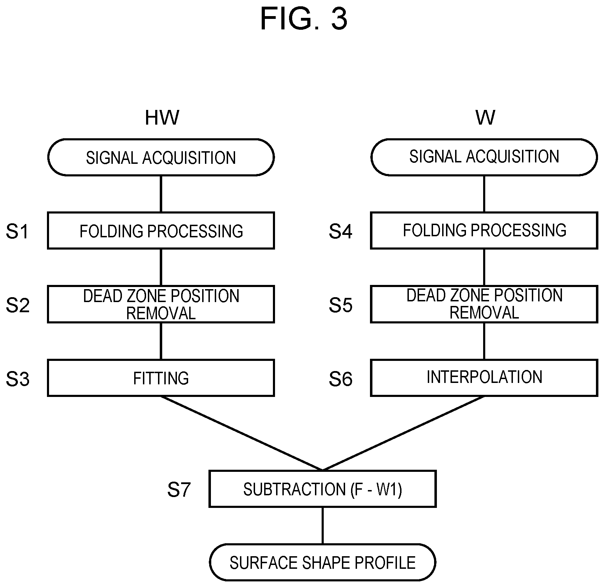

Fig. 3 is a flowchart of signal processing using signal processing unit 216, and the signal processing will be described based on the flowchart. After signal acquisition in which flat workpiece HW without unevenness is used to obtain a reference shape, folding processing S1, dead zone position removal processing S2, and fitting processing S3 are to be performed. After signal acquisition in measurement object W to obtain a measurement shape, folding processing S4, dead zone position removal processing S5, and interpolation processing S6 are to be performed. After signal processing S3, S6, subtraction processing S7 is to be performed.

Thus, after the signal acquisition and signal processing S1 to S3 using flat workpiece HW without unevenness are performed to obtain the reference shape, the signal acquisition and signal processing S4 to S6 using measurement object W are performed to obtain the measurement shape, and subtraction processing is finally performed to take a difference in the reference shape from the measurement shape in S7, and then the surface shape profile of object W can be acquired. However, measurement object W desirably has a thickness within +LD. Additionally, flat workpiece HW without unevenness has a dimension in a width direction orthogonal to a conveyance direction during conveyance for measurement, the dimension being equal to or larger than a dimension of object W in the width direction.

Flat workpiece HW without unevenness and measurement object W are identical in flow in folding processing S1 and S4 from the signal acquisition, and dead zone position removal processing S2 and S5, so that only measurement object W will be described about the flow.

When scanning mechanism 214 is used for scanning, a distance between measurement object W and scanning mechanism 214 is L/Cosθ, where θ is an incident angle of measurement light emitted from scanning mechanism 214 to measurement object W, and L is a shortest distance to measurement object W. At this time, a difference in the distance to measurement object W from distance L is L (1 - 1/cosθ). When W(θ) is displacement with respect to distance L from the rotation center of scanning mechanism 214 for incident angle θ to measurement object W, Expression (1) below is acquired. $W \left(θ\right) = L \left(1/cosθ-1\right)$ (1)

Displacement W (θ) indicates a surface shape profile of measurement object W based on distance L to measurement object W. Fig. 2C illustrates waveform z(θ) obtained by observing displacement W(θ) with SS-OCT device 201.

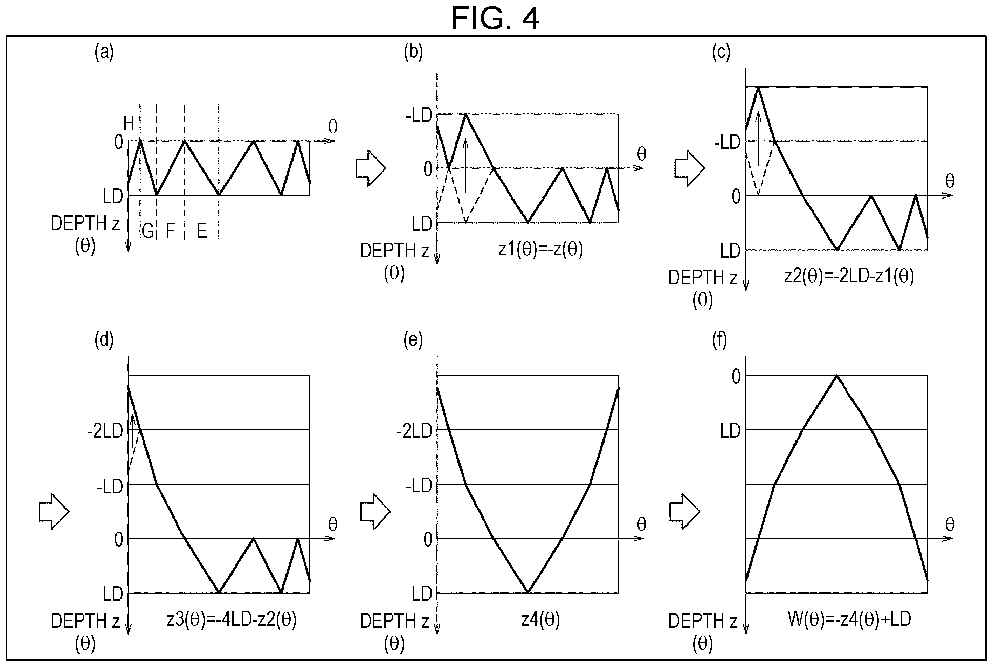

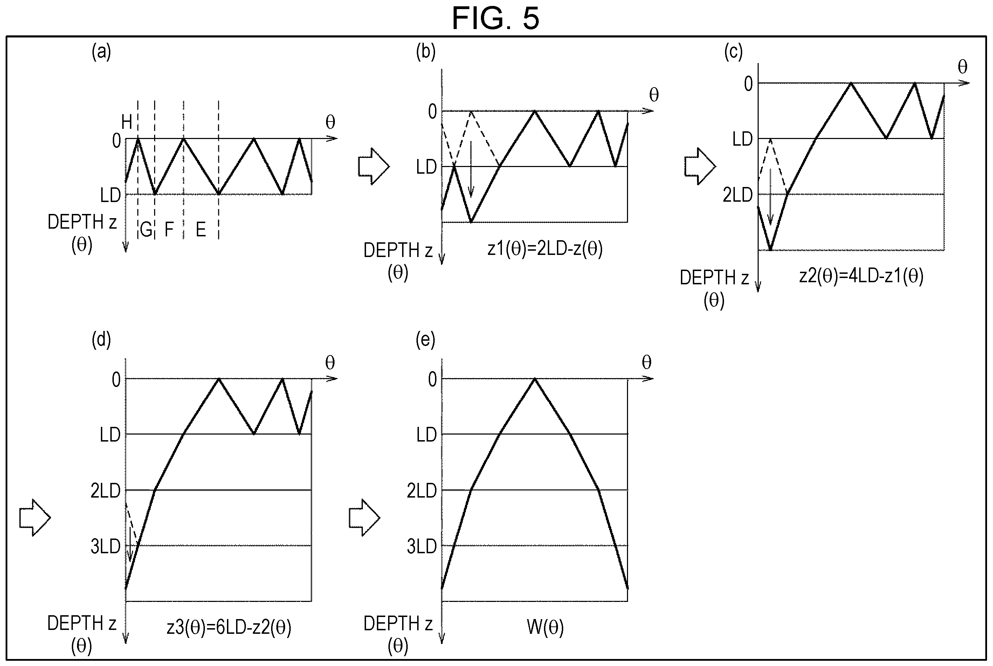

Part (a) of Fig. 4 and part (a) of Fig. 5 each illustrate a relationship between displacement W(θ) and scanning angle θ when scanning mechanism 214 scans measurement object W. When scanning angle θ increases, the distance between measurement object W and scanning mechanism 214 increases, and displacement W(θ) increases. Although displacement W(θ) with respect to scanning angle θ is originally nonlinear as in Expression (1), the displacement is illustrated linearly for the sake of simplicity of description due to a monotonous increase.

When association with Fig. 2C is considered, domain E illustrated in part (a) of Fig. 4 and part (a) of Fig. 5 is on a negative side of a zero-order coherence distance, domain F is on a positive side of the zero-order coherence distance, domain G is on a negative side of a positive first-order coherence distance, and domain H is on a positive side of the positive first-order coherence distance.

First, folding processing S4 will be described.

Fig. 4 is for a signal of an arc convex downward in domain E, in which a signal in part (a) of Fig. 4 obtained by folding back is returned to a signal in part (f) of Fig. 4 by folding processing of restoring the signal to displacement W(θ). This outline is illustrated in parts (b), (c), (d), (e), (f) of Fig. 4. For simplicity, a description will be given focusing on a domain on the left from the center of the signal.

First, when domains F, G, H are symmetrically moved about the zero point in part (b) of Fig. 4, Expression (2) below is acquired, where z1(θ) is a waveform thereof. $z 1 \left(θ\right) = - z \left(θ\right)$ (2)

Next, when domains G, H are symmetrically moved about -LD in part (c) of Fig. 4, Expression (3) below is acquired, where z2(θ) is a waveform thereof. $z 2 \left(θ\right) = - 2 LD - z 1 \left(θ\right)$ (3)

Subsequently, when domain H is symmetrically moved about -2LD in part (d) of Fig. 4, Expression (4) below is acquired, where z3(θ) is a waveform thereof. $z 3 \left(θ\right) = - 4 LD - z 2 \left(θ\right)$ (4)

Subsequently, the same signal processing as that on the left is performed also on the right from the center in part (e) of Fig. 4 to form a waveform thereof indicated by z4(θ).

Finally, calculation according to Expression (5) below is performed in the entire domain in part (f) of Fig. 4 to restore displacement W(θ).$W \left(θ\right) = - z 4 \left(θ\right) + LD$ (5)

Depending on the number of times of folding, Expressions up to Expression (5) are not necessary, and displacement W(θ) can be restored only by Expressions (2) and (3), for example.

In contrast, Fig. 5 is for a signal of an arc convex upward in domain E, in which a signal in part (a) of Fig. 5 obtained by folding back is returned to a signal in part (f) of Fig. 5 by folding processing of reproducing the signal to displacement W(θ). This outline is illustrated in parts (b), (c), (d), (e), (f) of Fig. 5. For simplicity, a description will be given focusing on a domain on the left from the center of the signal as with Fig. 4.

First, when domains F, G, H are symmetrically moved about LD in part (b) of Fig. 5, Expression (6) below is acquired, where z1(θ) is a waveform thereof. $z 1 \left(θ\right) = 2 LD - z \left(θ\right)$ (6)

Next, when domains G, H are symmetrically moved about 2LD in part (c) of Fig. 5, Expression (7) below is acquired, where z2(θ) is a waveform thereof. $z 2 \left(θ\right) = 4 LD - z 1 \left(θ\right)$ (7)

Subsequently, when domain H is symmetrically moved about 3LD in part (d) of Fig. 5, Expression (8) below is acquired, where z3(θ) is a waveform thereof. $z 3 \left(θ\right) = 6 LD - z 2 \left(θ\right)$ (8)

Subsequently, when the same signal processing as that on the left is performed also on the right from the center in part (e) of Fig. 5, the displacement can be restored to displacement W(θ).

This method is not preferable when scanning mechanism 214 discretely changes the measurement position because determination based on the inclination with respect to scanning angle θ cannot be performed.

Even when scanning mechanism 214 continuously scans, a non-flat plate object in which displacement W(θ) shows a discrete change, that is, a non-flat plate object such as a step-like plate is not preferable, and flat plate measurement object W needs to be continuously scanned at scanning angle θ.

Next, processing S5 of dead zone position removal will be described.

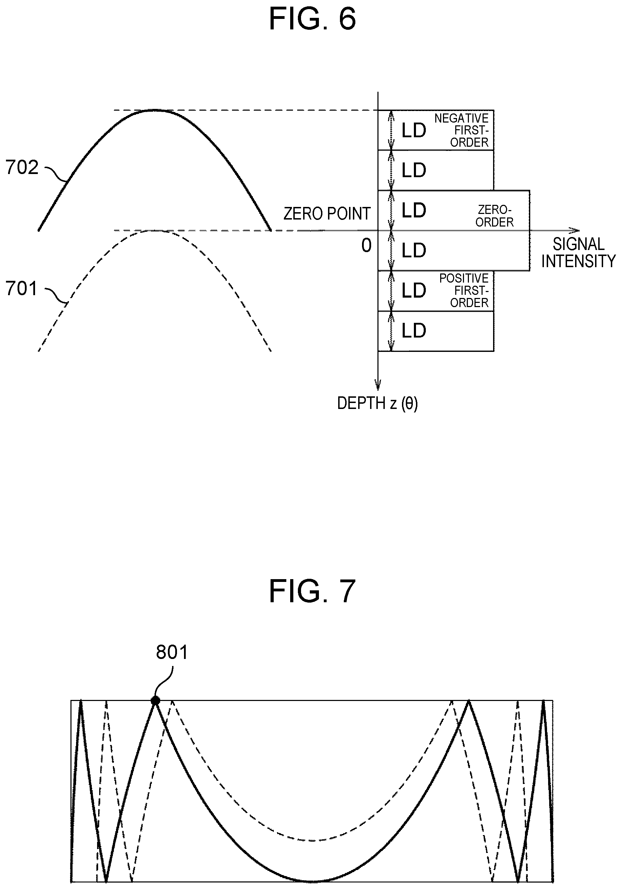

A point of folding is dead zone 801 as illustrated in Fig. 7, and a signal becomes unstable. Thus, signal processing unit 216 removes a signal at a position in the dead zone from a signal processed in processing S4.

Next, processing S6 of interpolation will be described.

For measurement object W, signal processing unit 216 linearly interpolates a removal signal related to signal removal in processing S5 from values of signals before and after the removal signal by the Fourier transform, and the linearly interpolated signal is defined as W1(θ). W1(θ) means a measurement shape.

Then, processing S3 of fitting will be described.

For flat workpiece HW without unevenness, signal processing unit 216 receives a signal after processing S1 and processing S2, the signal being defined as W2(θ), and performs fitting on signal W2(θ) with an n-th order function by the Fourier transform, and the signal obtained by the fitting is defined as F(θ). F(θ) means a reference shape and is stored in signal processing unit 216. At this time, "n" may be any natural number as long as "W2(θ)- F(θ)" is a linear signal as close as possible to zero. Alternatively, fitting by a function of a circle of "x^2 + y^2 = 1" may be used instead of the n-th order function, for example.

Finally, processing S7 of subtraction will be described.

Signal processing unit 216 performs "F(θ)- W1(θ)" to complete acquisition of a surface shape profile.

In other words, signal processing unit 216 stores a reference shape in advance, the reference shape being obtained by performing the Fourier transform on interference light of flat workpiece HW without unevenness in signal processing unit 216. Meanwhile, signal processing unit 216 performs the Fourier transform on interference light obtained from object W with irregularities as object W to obtain a measurement shape. Subsequently, signal processing unit 216 takes a difference from the reference shape from the measurement shape in processing S7 of subtraction to correct distortion of the measurement shape due to the arc scanning, so that the surface shape profile can be obtained.

### <Zero point position>

Fig. 6 illustrates a device of a zero point position for stably obtaining signal intensity even when an absolute value of scanning angle θ increases when scanning mechanism 214 is operated for scanning in SS-OCT device 201.

The conventional SS-OCT device illustrated in Fig. 8 sets the zero point position between the surface of measurement object 16 and +LD for linear scanning in a local range instead of the arc scanning with a wide width. Consequently, the positive side of the zero-order coherence length having the highest signal intensity is used.

However, SS-OCT device 201 of the present exemplary embodiment has a change in distance to measurement object W when scanning mechanism 214 is operated for scanning while the arc scanning is performed, the change being required up to a domain of the coherence length larger than the measurable range in the depth direction. The zero point position is set between a surface of flat workpiece HW without unevenness and +LD. This scanning is referred to as zero-order arc scanning 701. Although zero-order arc scanning 701 uses a zero-order domain having high signal intensity near the front of measurement head 209, a positive first-order domain having low signal intensity is used in a place where scanning angle θ has a large absolute value, that is, in a place far from an intersection of a line perpendicular from the measurement head 209 to the surface of flat workpiece HW without unevenness and flat workpiece HW without unevenness. This scanning deteriorates in signal intensity in a place where scanning angle θ has a large absolute value from a point of a large angle from measurement head 209 and a point of a distance longer than that near the front.

To suppress the deterioration in signal intensity at a place with scanning angle θ having a large absolute value, the zero point position at which a signal optical path length of signal light as measurement light and an optical path length of reference light reflected by reference surface 211 coincide with each other is set between 2LD and 3LD as a position advanced (in other words, moved away) from the surface of flat workpiece HW (or object W) without unevenness in the vertical direction opposite to measurement head 209 with respect to the surface of flat workpiece HW (or object W) without unevenness. This scanning is illustrated in Fig. 6 as a negative first-order arc scanning 702. The deterioration in signal intensity is small near the front because reflected light or scattered light from flat workpiece HW (or object W) without unevenness is easily returned due to a small angle, and a distance from flat workpiece HW is short. In contrast, the deterioration in signal intensity is large at a place where scanning angle θ has a large absolute value. Thus, when the zero point position is set to a position of negative first-order arc scanning 702, the zero-order domain can be used at that place, and thus the deterioration in signal intensity can be suppressed.

Although the present exemplary embodiment allows the zero point position to be set between 2LD and 3LD from the surface of flat workpiece HW (or object W) without unevenness on a side opposite to measurement head 209, this is one example. The zero-order domain is important to be used near both ends of a width to be measured along the scanning direction of flat workpiece HW (or object W) without unevenness. Thus, the position of the zero point may be set between -3LD and zero in Fig. 6, for example. When a negative second-order and subsequent orders are also necessary, the zero point may be set to a position more negative than -3LD, and both ends may be set to the zero-order domain. Then, domains near both ends of measurement workpiece HW (or the object W) in the scanning direction are basically desired to be set within the Nyquist frequency, that is, within the measurement range, that is, in the zero-order coherent region by moving the position of the reference surface. This setting enables suppressing deterioration in the signal intensity of the measurement light from near both ends of object W.

### <Control of dead zone position>

For expansion of the measurable range in the present exemplary embodiment, the arc scanning is folded back into the measurement range. At this time, a point of the folding serves as dead zone 801 as illustrated in Fig. 7, and measurement becomes impossible. The signal of the arc scanning changes from the solid line to the dotted line in Fig. 7 by moving the zero point position, so that the zero point position can be moved by moving reference surface 211 using stepping motor 210 under control of controller 290, and thus dead zone 801 can be controlled. At that time, the control is performed to always locate a part of a waveform in domain E in each of Figs. 4 and 5 where the signal can be acquired most stably at the same position.

Consequently, the dead zone position is shifted every time in continuous signal acquisition, thus enabling measurement without a dead zone at a fixed position.

Meanwhile, the zero point position may change due to change in the optical path length caused by expansion and contraction of a fiber caused by a temperature change, which is one of causes, and then the dead zone position may be unintentionally displaced. When the dead zone position is desired to be fixed, the dead zone position can be controlled by stepping motor 210.

According to the exemplary embodiment, a plurality of signals including a signal within Nyquist frequency and alias 302 from object W is taken in to restore alias 302 to a frequency domain of an actual measured value, while a signal having the Nyquist frequency or more and attenuated by the LPF in the conventional SS-OCT device is prevented from being attenuated. As a result, measurement can be performed even when a change in distance to a measurement object range during scanning is larger than a measurement range in a depth direction, that is, the measurement range can be expanded. Thus, even when a distance to object W is larger than a measurable range, a surface shape of object W can be measured. Then, a plurality of signals from object W of a workpiece with a flat surface is divided into signals within the Nyquist frequency and aliases by arc scanning. The aliases mean signals that are folded back centered on the Nyquist frequency into the measurable range from the zero point because signals having the Nyquist frequency or more are outside a maximum measurable range. Additionally, positive and negative frequencies cannot be discriminated in principle, so that a signal of the negative frequency is folded back to a signal of the positive frequency centered on the zero point.

When any of the various exemplary embodiments and modifications described above are combined as appropriate, the effect exerted by each of the exemplary embodiments or modifications can be achieved. Combinations of exemplary embodiments, combinations of examples, and combinations of exemplary embodiments and examples can be made, and combinations of features in different exemplary embodiments or examples can also be made.

### (Supplementary note)

The above description of the exemplary embodiments discloses following techniques.

(Technique 1) An optical interference measurement device that measures an object by using interference light between reference light and measurement light emitted from a wavelength scanning light source to continuously irradiate the object using arc scanning, and reflected from the object, the optical interference measurement device including: an optical interference measurement unit including interference light detection portion for receiving the interference light and generating an interference light signal indicating an intensity of the interference light; and a signal processing unit that samples the interference light signal to generate a plurality of signals including a signal within Nyquist frequency and an alias, restores the alias to a frequency domain of an actual measurement value, and acquires a surface shape profile of the object based on the signal within the Nyquist frequency and the signal restored from the alias.

(Technique 2) The optical interference measurement device described in Technique 1, in which the optical interference measurement unit sets not only a zero point position at which a signal optical path length of signal light that is the measurement light coincides with an optical path length of reference light reflected by a reference surface to a position advanced from the surface of the object in a direction perpendicular to the surface of the object on a side opposite to a measurement head that irradiates the object with the measurement light with respect to the surface of the object, but also a domain near both ends of the object in a scanning direction within the Nyquist frequency by moving the position of the reference surface in the arc scanning.

(Technique 3) The optical interference measurement device described in Technique 1 or Technique 2, in which the signal processing unit calculates a reference shape by performing Fourier transform on interference light of a flat workpiece without unevenness in advance, stores the reference shape, calculates a measurement shape by performing the Fourier transform on interference light obtained from an object with unevenness as the object, and calculates a difference between the measurement shape and the reference shape to correct distortion of the shape acquired by the arc scanning to acquire the surface shape profile.

(Technique 4) The optical interference measurement device described in any one of Techniques 1 to 3, further including a reference surface movement device that changes an optical path length of the reference light by moving a position of a reference surface on which the reference light is reflected, cancels a change in difference of optical path length from the signal optical path length, and always keeps the zero point position constant.

Each of these configurations allows a plurality of signals including a signal within Nyquist frequency (that is, less than the Nyquist frequency) and an alias from an object to be taken in, and allows the alias to be restored to a frequency domain of an actual measured value, while preventing a signal having the Nyquist frequency or more from being attenuated, the signal being attenuated by the LPF in the conventional SS-OCT device. As a result, measurement can be performed even when a change in distance to a measurement object range during scanning is larger than a measurement range in a depth direction, that is, the measurement range can be expanded. Thus, even when a distance to an object is larger than a measurable range, a surface shape of the object can be measured.

### INDUSTRIAL APPLICABILITY

The optical interference measurement device according to the above aspect of the present disclosure has a feature that enables surface shape measurement in a wide range over a long distance, and can also be applied to applications such as precision measurement in an industrial field.

### REFERENCE MARKS IN THE DRAWINGS

- 10: wavelength scanning light source
- 11: lens
- 12: mirror
- 13: beam splitter
- 14: lens
- 15: galvanometer mirror
- 16: measurement object
- 17: photodetector
- 18: amplifier
- 19: trigger generator
- 20: k-trigger generator
- 21: LPF
- 22: Fourier transform circuit
- 201: SS-OCT device
- 202: wavelength scanning light source
- 203: optical fiber interferometer
- 204: photodetector
- 205: wavelength scanning light generator
- 206: trigger generator
- 207: k-clock generator
- 208: coupler
- 209: measurement head
- 210: stepping motor
- 211: reference surface
- 212: collimator lens
- 213: varifocal collimator
- 214: scanning mechanism
- 215: 50:50 coupler
- 216: signal processing unit
- 290: controller
- 291: scanning controller
- 301: signal having the Nyquist frequency or higher
- 302: alias
- 303: original signal in arc scanning
- 701: zero-order arc scanning
- 702: negative first-order arc scanning
- 801: dead zone
- L: distance to measurement object W
- LD: measurable range
- W: measurement object
- HW: flat workpiece without unevenness
- θ: scanning angle

## Claims

1. An optical interference measurement device that measures an object by using interference light between reference light and measurement light emitted from a wavelength scanning light source to continuously irradiate the object using arc scanning, and reflected from the object, the optical interference measurement device comprising:
an optical interference measurement unit including interference light detection portion for receiving the interference light and generating an interference light signal indicating an intensity of the interference light; and
a signal processing unit that samples the interference light signal to generate a plurality of signals including a signal within Nyquist frequency and an alias, restores the alias to a frequency domain of an actual measurement value, and acquires a surface shape profile of the object based on the signal within the Nyquist frequency and the signal restored from the alias.

2. The optical interference measurement device according to Claim 1, wherein the optical interference measurement unit sets not only a zero point position at which a signal optical path length of signal light that is the measurement light coincides with an optical path length of reference light reflected by a reference surface to a position advanced from the surface of the object in a direction perpendicular to the surface of the object on a side opposite to a measurement head that irradiates the object with the measurement light with respect to the surface of the object, but also a domain near both ends of the object in a scanning direction within the Nyquist frequency by moving the position of the reference surface in the arc scanning.

3. The optical interference measurement device according to Claim 1 or 2, wherein
the signal processing unit has functions of:
calculating a reference shape by performing Fourier transform on interference light of a flat workpiece without unevenness in advance;
storing the reference shape;
calculating a measurement shape by performing the Fourier transform on interference light obtained from an object with unevenness as the object; and
acquiring the surface shape profile by calculating a difference between the measurement shape and the reference shape to correct distortion of the shape acquired by the arc scanning.

4. The optical interference measurement device according to Claim 2, further comprising a reference surface movement device that changes an optical path length of the reference light by moving a position of a reference surface, cancels a change in difference of optical path length from the signal optical path length, and always keeps the zero point position constant.
